# EUROPÄISCHE PATENTSCHRIFT

(11) **EP 2 298 057 B1**
(45) Veröffentlichungstag und Bekanntmachung des Hinweises auf die Patenterteilung: **20.06.2012**
(21) Anmeldenummer: 10007707.2
(22) Anmeldetag: 24.07.2010
(51) Int. Cl.: A01D 33/08

(54) **Vorrichtung zum Fördern und Reinigen von Erntegut in Form von Wurzelfrüchten, insbesondere in Form von Zuckerrüben, sowie Reinigungslader mit einer solchen Vorrichtung**
Device for transporting and cleaning harvested goods in the form of root crops, in particular in the form of sugar beets, and cleaning loader with such a device
Dispositif de transport et de nettoyage de produits de récolte sous forme de plantes à racines, notamment sous forme de betteraves sucrières, et chargeuse nettoyeuse dotée d'un tel dispositif

(30) Priorität: 18.09.2009 DE 202009012623 U
(43) Veröffentlichungstag der Anmeldung: 23.03.2011
(73) Patentinhaber: Holmer Maschinenbau GmbH, 84069 Eggmühl (DE)
(72) Erfinder: Neumeier, Anton, 94315 Straubing (DE); Roth, Johann, 84085 Langquaid (DE)
(74) Vertreter: Graf Glück Habersack Kritzenberger

(56) Entgegenhaltungen:
- EP-A2- 1 310 148
- WO-A1-96/24240
- GB-A- 2 247 817
- US-A- 5 372 546

## Beschreibung

Die Erfindung bezieht sich auf eine Vorrichtung gemäß Oberbegriff Patentanspruch 1 und auf einen Reinigungslader gemäß Oberbegriff Patentanspruch 10.

Eine solche vorrichtung ist durch die US-A-5372546 bekannt.

Reinigungslader, d.h. Vorrichtungen zum Aufnehmen von Erntegut in Form von gerodeten Wurzelfrüchten, insbesondere von Zuckerrüben aus Feldmieten sowie zum Überführen des vorgereinigten Erntegutes in Transportfahrzeuge sind in verschiedensten Ausführungen bekannt, insbesondere auch als selbstfahrende oder als nicht selbstfahrende Geräte oder Maschinen. Bekannt ist es auch, innerhalb der an dem jeweiligen Reinigungslader ausgebildeten Transportstrecke für das Rode- oder Erntegut eine Nachreinigungsstrecke vorzusehen, die wenigstens einen Transporteur aufweist, der entweder ein das Rodegut transportierendes und zugleich abreinigendes Siebband oder aber ein das Rodegut transportierender und zugleich abreinigender Zwickelwalzenreiniger ist, d.h. ein Transporteur, dessen Transportfläche von mehreren einander benachbarten und gegenläufig angetriebenen Reinigungswalzen gebildet ist. Abhängig von der Beschaffenheit des Erntegutes, die unter anderem von den Witterungs- und Bodenverhältnissen während des Rodens abhängt, bieten beide Arten von Transporteuren oder Reinigungsstrecken Vor- und Nachteile.

Mit dem als Siebband ausgebildeten Transporteur ist eine besonders schonende Abreinigung des Erntegutes ohne starke mechanische Belastung möglich, allerdings bei losen anhaftenden Verunreinigungen, wie Erde, Steine usw. Mit dem als Zwickelreiniger ausgebildeten Transporteur ist hingegen eine intensivere Abreinigung des Erntegutes, auch bei intensiver oder fest anhaftenden Verunreinigungen, insbesondere in Form von feuchter Erde, sowie eine Trennung des Erntegutes von Beikraut und Blättern möglich. Der Zwickelreiniger wird daher bevorzugt bei einem Erntegut mit hohem Erdanhang verwendet. Nachteilig ist bei Verwendung des als Zwicketwatzenreiniger ausgebildeten Transporteurs aber eine reduzierte Förderleistung und ein erhöhter Anteil von Bruchverlusten im Erntegut.

Aufgabe der Erfindung ist es, eine Vorrichtung zum Reinigen und Transportieren von Erntegut in Form von Wurzelfrüchten, insbesondere Zuckerrüben, aufzuzeigen, die eine stufenlose Anpassung der Reinigungsintensität an die Beschaffenheit des Erntegutes bzw. der jeweiligen Feldmiete und dabei insbesondere auch an die Beschaffenheit der Verunreinigung des zu der jeweiligen Feldmiete zusammengeführten Erntegutes ermöglicht.

Zur Lösung dieser Aufgabe ist eine Vorrichtung zum Transportieren und Reinigen von Wurzelfrüchten entsprechend dem Patentanspruch 1 ausgebildet. Ein Reinigungslader zum Aufnehmen, Reinigen und Überführen des Erntegutes an die Ladefläche eines Transportfahrzeugs ist Gegenstand des Patentanspruches 10.

Der besondere Vorteil der erfindungsgemäßen Vorrichtung besteht darin, dass der Reinigungsgrad bzw. die Reinigungsart (durch Siebband und/oder durch Zwickelreiniger) und der Anteil der jeweiligen Reinigungsart an der gesamten Nachreinigung stufenlos einstellbar sind, und zwar zwischen einem ersten extremen Betriebszustand, in welchem die Vorrichtung ausschließlich oder im wesentlichen als Siebband- oder Siebkettenreiniger wirkt, und einem zweiten extremen Betriebszustand, in welchem die Vorrichtung ausschließlich oder im wesentlichen nur als Zwickelwalzenreiniger wirkt. Zwischen diesen beiden Extremen sind beliebige Kombinationen stufenlos einstellbar, und zwar in Anpassung an den Zustand des Erntegutes bzw. an die Boden- und Witterungsbedingungen bei denen das Erntegut gerodet wurde, wobei diese Einstellung auch während des Betriebes motorisch jederzeit geändert werden kann.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:

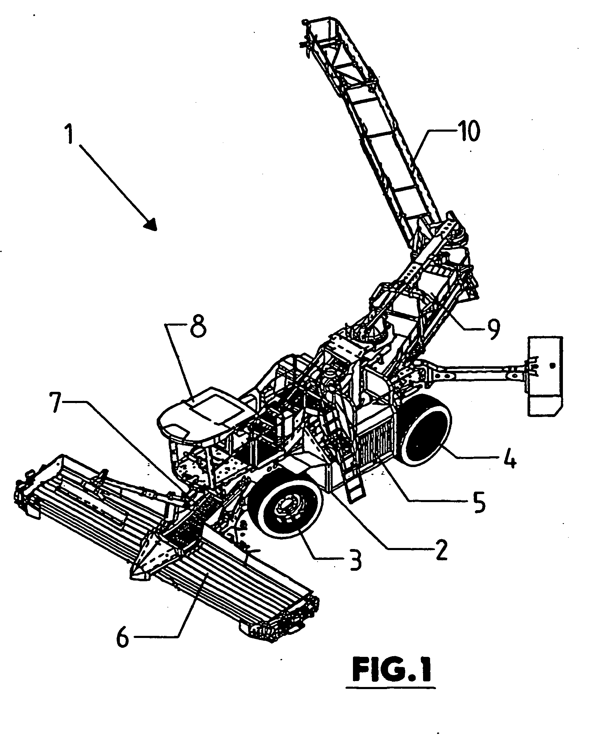

- Fig. 1: in perspektivischer Darstellung einen Rübenreinigungslader gemäß der Erfindung;
- Fig. 2 und 3: in perspektivischer Einzeldarstellung eine Nachreinigungsstrecke des Rübenreinigungsladers der Figur 1;
- Fig. 4: in vereinfachter schematischer Darstellung den Verlauf des Siebbandes.

Der in den Figuren allgemein mit 1 bezeichnete Reinigungslader dient zum Aufnehmen von gerodetem Erntegut in Form von Zuckerrüben z.B. aus Feldmieten und zum Überladen des Erntegutes auf Transportfahrzeuge, beispielsweise auf Lkws oder Anhänger für den Weitertransport, beispielsweise für den Straßentransport zu einem in das Erntegut verarbeitenden Betrieb (beispielsweise Zuckerfabrik).

Der Reinigungslader 1 ist bei der dargestellten Ausführungsform selbstfahrend ausgebildet und besteht hierfür aus einem Fahrzeugrahmen 2 mit zwei Fahrzeugachsen 3 und 4, von denen wenigstens eine lenkbar und wenigstens eine durch einen Fahrzeugantrieb oder -Motor 5 angetrieben ist. An der Vorderseite des Fahrzeugrahmens 2 ist eine Erntegutaufnahme 6 vorgesehen, mit der das Erntegut auf großer Breite aufgenommen und dann zu einem mittigen verengten Erntegutstrom zusammengeführt an einen fahrzeuginternen Transporteur 7 weitergeleitet wird, mit welchem das Erntegut u.a. unter einer an der Fahrzeugfrontseite vorgesehenen Fahrerkabine 8 hindurch in Richtung Fahrzeugheck transportiert wird. Das Erntegut bzw. der von diesem Erntegut gebildete Erntegutstrom gelangt dort auf eine über das Heck des Fahrzeugrahmens 2 wegstehende Nachreinigungsstrecke 9 und von dieser auf einen als Überlader dienenden Ausleger oder Transporteur 10, mit dem es in das nicht dargestellte Transportfahrzeug eingebracht wird.

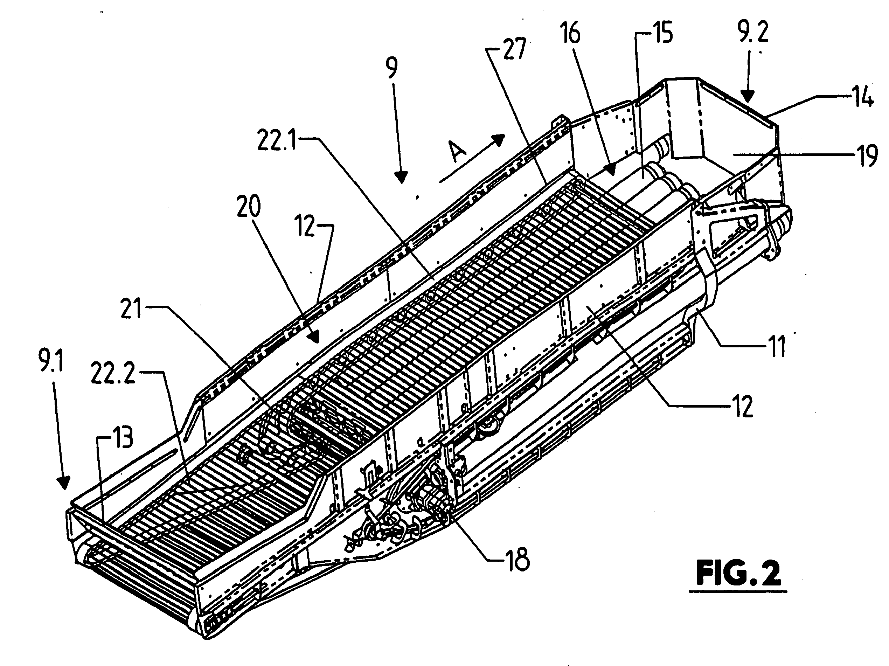

Eine Besonderheit des Reinigungsladers 1 besteht in der Ausbildung der Nachreinigungsstrecke 9, die in den Figuren 2 - 4 nochmals im Detail dargestellt ist und auf der das Rode- oder Erntegut beim Überladen in der mit dem Pfeil A angegebenen Transportrichtung gefördert wird. Die Nachreinigungsstrecke 9 besteht u.a. aus einem Rahmen 11, der eine sich in Transportrichtung A erstreckende, an der Oberseite offene rinnenartige Förderstrecke für das Erntegut bildet, die an den beiden in Transportrichtung A verlaufenden Längsseiten durch Wandabschnitte 12, an der bezogen auf die Transportrichtung A vorderen Stirnseite bzw. Erntegutaufgabe 9.1 u.a. durch den Wandabschnitt 13 und an der bezogen auf die Transportrichtung A rückwärtigen Stirnseite bzw. Erntegutabgabe 9.2 u.a. durch den Wandabschnitt 14 begrenzet ist.

Im Rahmen 11 sind mehrere Reinigungswalzen 15 drehbar gelagert, und zwar derart, dass diese Walzen mit ihrer Längserstreckung jeweils in Längsrichtung des Rahmens 11 bzw. in Förderrichtung A orientiert sind und dicht aneinander anschließen, sodass sie in ihrer Gesamtheit eine Ernteguttransportfläche eines Zwickelwalzenreiniger 16 bilden, auf der (Transportfläche) das Erntegut bei Verwendung des Zwickelwalzenreinigers, d.h. bei einer intensiveren Nachreinigung in der nachstehend noch näher beschriebenen Weise aufliegt. Die Reinigungswalzen 15 sind an ihrer bei der dargestellten Ausführungsform kreiszylinderförmigen Außenfläche jeweils mit einer Wendel bzw. mit einem Schneckengang 17 versehen, und zwar derart, dass der Schneckengang benachbarter Reinigungswalzen 15 jeweils gegenläufig ausgebildet ist. Durch einen Antrieb 18 und weitere, nicht dargestellte Getriebeelemente sind die Reinigungswalzen 15 während des Betriebes des Reinigungsladers 1 so angetrieben, dass einander benachbarte Reinigungswalzen 15 jeweils gegenläufig umlaufen.

Die Reinigungswalzen 15 des Zwickelwalzenreinigers 16 enden bezogen auf die Transportrichtung A mit Abstand von der Stirnwand 14, sodass im Bereich dieser Stirnwand eine Abgabeöffnung 19 gebildet ist, über die das Erntegut nach dem Passieren der Nachreinigungsstrecke 9 auf den unterhalb der Öffnung 19 anschließenden Transporteur 10 gelangt. Wie in den Figuren dargestellt erstreckt sich der Zwickelwalzenreiniger 16 ausgehend von der Übergabeöffnung 19 entgegen der Transportrichtung A etwa über die Hälfte oder 2/3 Drittel der Länge der Nachreinigungsstrecke 9.

Unterhalb des Zwickelwalzenreinigers 16 ist der Rahmen 11 offen, sodass bei der Nachreinigung vom Erntegut abgereinigte Verunreinigungen, beispielsweise Steine, Erde, Rüben- und Beikraut usw. auf den Ackerboden fallen kann.

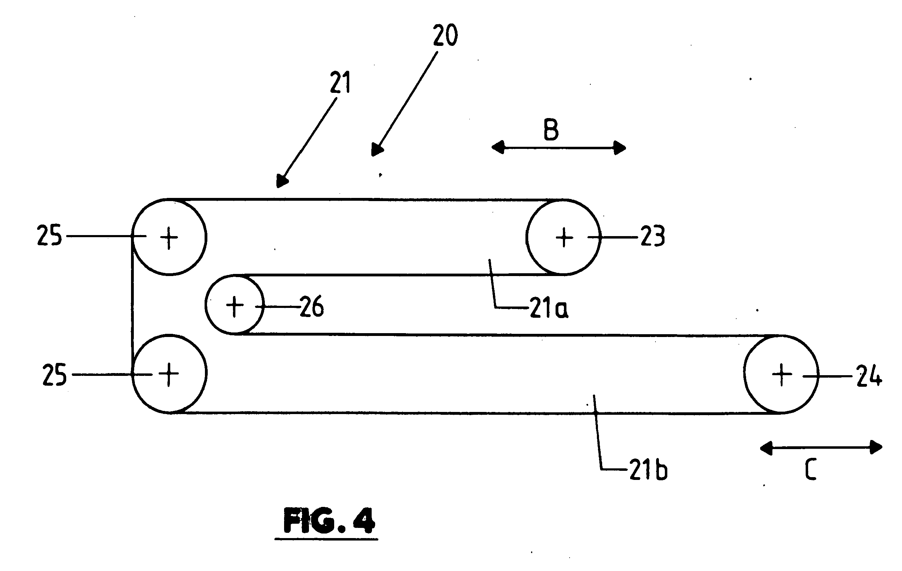

Am Rahmen 1 ist weiterhin ein Siebbandreiniger 20 mit einem Siebband 21 vorgesehen, welches eine geschlossene Schlaufe bildet, wie insbesondere auch in der Figur 4 schematisch dargestellt ist. Das Siebband 21 besteht bei der dargestellten Ausführungsform im Wesentlichen aus zwei ebenfalls jeweils eine geschlossene Schlaufe bildenden Riemen 22.1, die ebenfalls jeweils eine geschlossene Schlaufe bilden, deren Schlaufenebenen parallel zur Transportrichtung A und senkrecht zur Transportebene der Nachreinigungsstrecke 9 orientiert sind, sowie aus einer Vielzahl von Stäben 22.2, die sich zwischen den beiden Riemen 22.1 erstrecken und Siebbandlängsrichtung jeweils beabstandet sind.

Wie insbesondere auch der schematischen Darstellung der Figur 4 zu entnehmen, ist das Siebband 21 über mehrere Siebbandumlenkungen 23 - 26 z.B. in Form von Umlenkrollen oder -walzen derart geführt, dass es bzw. dessen Schlaufe zwei einander überlappende Schlaufenabschnitte 21 a und 21b bildet, von denen der Schlaufenabschnitt 21 a oberhalb des Schlaufenabschnittes 21 b vorgesehen ist. Der von den Siebbandumlenkungen 25 und 26 gebildete Übergang zu den Schlaufen- oder Siebbandabschnitten 21 a und 21 b ist an der Erntegutaufgabe 9.1 unterhalb der dortigen Wandung 13 vorgesehen. Weiterhin befindet sich der obere Siebbandabschnitt 21 a auf einem Niveau oberhalb des Zwickelwalzenreinigers 16 und der Siebbandabschnitt 21 b zumindest auf einer Teillänge auf einem Niveau unterhalb des Zwickelwalzenreinigers 16.

Durch den Antrieb 18 ist das Siebband 21 während des Betriebes des Reinigungsladers 1 so angetrieben, dass die obere Schlaufenlänge des Siebbandabschnittes 21 a, die Transportfläche des Siebbandreinigers 20 bildet, sich in Transportrichtung A bewegt. Die Achsen der Siebbandumlenkungen 23 - 26 sind senkrecht zur Transportrichtung A orientiert.

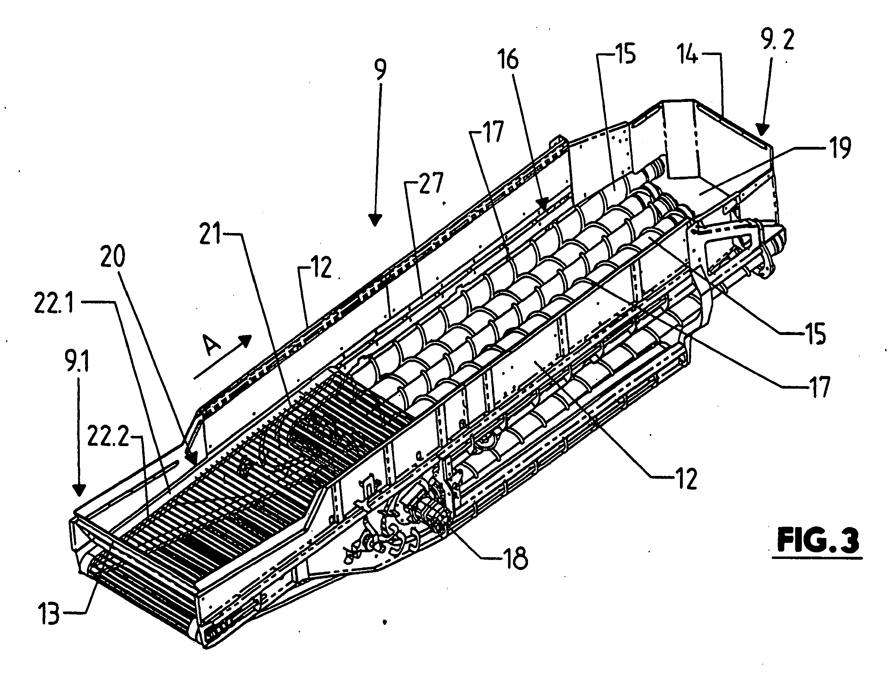

Die Siebbandumlenkungen 23 und 24 sind in Transportrichtung A oder entgegen dieser Transportrichtung gegenläufig derart verstellbar, dass der Siebbandreiniger 20 bzw. das Siebband 21 jalousieartig über dem Zwickelwalzenreiniger bewegbar ist, und zwar zwischen ersten Betriebszustand, in welchem der obere von der Erntegutaufgabe 9.1 ausgehende Siebbandabschnitt 21 a den Zwickelwalzenreiniger 16 auf seiner gesamten Länge oder im Wesentlichen auf seiner gesamten Länge abdeckt (Figur 2) und an der Übergabeöffnung 19 oder in der Nähe dieser Öffnung endet, und einem zweiten Betriebszustand, in welchem das Siebband 21 eine an die Erntegutaufgabe 9.1 anschließende und bis an den Zwickelreiniger 16 reichende Förder- und Reinigungsstrecke bildet (Figur 3).

Es versteht sich, dass das Siebband 21 zwischen diesen beiden extremen Betriebszuständen jeden beliebigen Zustand einnehmen kann, d.h. je nach Erfordernis der oberen Siebbandabschnitte 21a den Zwickelwalzenreiniger 16 mehr oder weniger stark überdecken kann. Für das jalousieartige Bewegen des Siebbandes 21 sind am Rahmen 11 seitliche, sich in Transportrichtung A oder im Wesentlichen in Transportrichtung erstreckende Führungen 27 für die Siebbandumlenkungen 23 und 24 vorgesehen.

Die Vorteile der Nachreinigungsstrecke 9 bestehen u.a. darin, dass auf dem ersten Teil der Förderstrecke zunächst eine schonende Abreinigung des Erntegutes mit dem Siebbandreiniger 20 erfolgt, und zwar unabhängig von der Einstellung des Siebbandes 21. Durch die Einstellung des Siebbandes 21 bzw. der von diesem gebildeten Länge der Förderstrecke ist es möglich, die Arbeitsweise der Nachreinigungsstrecke 9 bzw. deren Reinigungsintensität und/oder -art stufenlos an die jeweiligen Verhältnisse anzupassen. Für eine schonende Abreinigung des Erntegutes befindet sich das Siebband 20 in dem den Zwickelwalzenreiniger 16 vollständig oder nahezu vollständig überdeckenden ersten Betriebszustand, was insbesondere bei trockenem und wenig steinigem Boden möglich ist, und zwar bei geringen Verschleiß der Nachreinigungsstrecke 9 und bei geringem Erntegutbruch. Ist aufgrund der Boden- und Witterungsverhältnisse beim Roden eine intensive Nachreinigung des Erntegutes notwendig, so wird der Siebbandabschnitt 21 a soweit zurückbewegt bzw. verkleinert, sodass der Zwickelwalzenreiniger 16 auf längerem Transportweg zur Wirkung kommt und dadurch intensiver anhaftende Verschmutzungen und Beikraut vom Erntegut entfernt wird, allerdings evtl. mit dem Nachteil höherer Bruchverluste.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrundeliegende Erfindungsgedanke verlassen wird. So wurde vorstehen davon ausgegangen, dass der Siebbandreiniger 20 von einem einzigen Siebband gebildet ist. Der Siebbabyreiniger 20 kann aber auch zwei oder mehr als zwei Siebbänder aufweisen.

Weiterhin wurde vorstehen davon ausgegangen, dass das Siebband 21 von zwei Riemen 22.1 und von Stäben 22.2 gebildet ist, die sich zwischen diesen Riemen erstrecken. Selbstverständlich kann das Siebband 21 auch anders ausgeführt sein und/oder anstelle der Riemen 22.1 können auch andere band- oder riemen- oder kettenartige, jeweils eine geschlossene Schlaufe bildende Transportelemente verwendet sein.

Vorstehend wurde weiterhin auch davon ausgegangen, dass sich die unteren Siebbandlänge 21 b unterhalb der Siebbandlänge 21 a befindet und das Siebband 21 zur stufenlosen Einstellung der Reinigungswirkung der Nachreinigungsstrecke 9 mehr oder weniger weit unter die Reinigungswalzen 15 des Zwickelwalzenreinigers 16 einführbar ist. Wenngleich diese Ausführung den Vorteil hat, dass die Nachreinigungsstrecke 9 als voll funktionsfähige Baueinheit bzw. als vollfunktionsfähiges Modul mit geringen Abmessungen insbesondere auch in der Achse der Transportrichtung A sowie quer zu dieser Achse gefertigt und an dem Fahrzeugrahmen 2 montiert werden kann, sind auch andere Ausführungen denkbar, bei denen das Siebband mit seinem aktuell nicht als Transportebene für das Erntegut genutzten Siebbandabschnitt anderweitig außerhalb der Ernteguttransportstrecke der Nachreinigungsstrecke angeordnet ist, beispielsweise unterhalb eines im Fahrzeugrahmen vorgesehenen Transporteurs.

### Bezugszeichenliste

- 1: Reinigungslader
- 2: Fahrzeugrahmen
- 3,4: Fahrzeugachse
- 5: Antrieb
- 6: Aufnahme
- 7: Ernteguttransporteur
- 8: Fahrerkabine
- 9: Nachreinigungsstrecke
- 10: Transporteur oder Überlader
- 11: Rahmen
- 12 - 14: Wand
- 15: Reinigungswalze
- 16: Zwickelwalzenreiniger
- 17: Schneckengang
- 18: Antrieb
- 19: Übergabeöffnung
- 20: Siebbandreiniger
- 21: Siebband
- 21 a, 21 b: Siebbandabschnitt
- 22.1: Riemen oder Kette
- 22.2: Stab
- 23 - 26: Siebbandumlenkung
- 27: Führung
- A: Transportrichtung
- B, C: radiale Bewegung der Siebbandumlenkungen 23 und 24

## Patentansprüche

1. Vorrichtung zum Transportieren und Reinigen von Rode- oder Erntegut, vorzugsweise zum Transportieren und Reinigen von Zuckerrüben, mit einer das Erntegut in einer Transportrichtung (A) fördernden und dabei reinigenden Transportstrecke, mit wenigstens einem ersten als Walzenreiniger oder Zwickelwalzenreiniger ausgebildeten Transporteur (16), welcher eine erste von wenigstens zwei einander benachbarten und umlaufend antreibbaren Reinigungswalze (15) gebildete Transportebene für das Erntegut aufweist, **gekennzeichnet**
**durch** wenigstens einen zweiten, als Siebbandreiniger (20) ausgebildeten Transporteur mit einer zweiten von wenigstens einem Siebband (21) gebildeten Transportfläche für das Erntegut,
wobei der wenigstens eine erste Transporteur (16) und der wenigstens eine zweite Transporteur (20) für eine Anpassung der Abreinigung des Erntegutes relativ zueinander bewegbar sind, und zwar zwischen wenigstens einem ersten Betriebszustand, in welchem die Transportfläche des ersten Transporteurs (16) von der Transportfläche des zweiten Transporteurs überlappt wird, und wenigstens einem zweiten Betriebszustand, in welchem die Transportflächen der Transporteure (16, 20) in Transportrichtung (A) ohne Überlappung oder mit einer gegenüber dem ersten Betriebszustand reduzierten Überlappung geringfügig überlappt aneinander anschließen.

2. Vorrichtung nach Anspruch 1, **dadurch gekennzeichnet, dass** im ersten Betriebszustand die Transportfläche des wenigstens einen ersten Transporteurs (16) von der Transportfläche des zweiten Transporteurs vollständig oder nahezu vollständig, beispielsweise bis zu wenigstens 50% überlappt wird.

3. Vorrichtung nach Anspruch 1 oder 2, **dadurch gekennzeichnet, dass** bezogen auf die Transportrichtung (A) der wenigstens einen zweiten Transporteur (20) dem ersten Transporteur (16) vorauseilt.

4. Vorrichtung nach einem der vorhergehenden Ansprüche, **dadurch gekennzeichnet, dass** der wenigstens eine zweite Transporteur (20) relativ zum ersten Transporteur (16) bewegbar ist.

5. Vorrichtung nach einem der vorhergehenden Ansprüche, **dadurch gekennzeichnet, dass** der wenigstens eine erste Transporteur (16) und der wenigstens eine zweite Transporteur (20) stufenlos relativ zueinander einstellbar oder bewegbar sind.

6. Vorrichtung nach einem der vorhergehenden Ansprüche, **dadurch gekennzeichnet, dass** der wenigstens eine zweite Transporteur (20) für die Anpassung der Abreinigung mit einer im zweiten Betriebszustand nicht als Transportfläche für das Erntegut genutzten Länge unter einen zum Transport des Ernteguts dienenden Transporteur bewegbar ist, beispielsweise unter den ersten Transporteur (16).

7. Vorrichtung nach einem der vorhergehenden Ansprüche, **gekennzeichnet durch** Mitteln (25, 26) zum Umlenken des zweiten Transporteurs (20) in der Weise, dass dieser zumindest im zweiten Betriebszustand wenigstens einen oberen, die Transportfläche für das Erntegut bildenden Abschnitt (21 a) sowie einen unterhalb dieses Abschnitts verlaufenden weiteren Abschnitt (20b) bildet.

8. Vorrichtung nach Anspruch 7, **dadurch gekennzeichnet, dass** die Mittel (25, 26) zum Umlenken des zweiten Transporteurs (20) an einem Ernteguteinlauf oder an eine Erntegutaufgabe (9.1) vorgesehen ist.

9. Vorrichtung nach einem der vorhergehenden Ansprüche, **dadurch gekennzeichnet, dass** die wenigstens zwei Reinigungswalzen (15) des ersten Transporteurs (16) mit ihrer Walzenachse oder Längserstreckung in Transportrichtung (A) angeordnet sind.

10. Vorrichtung nach einem der vorhergehenden Ansprüche, **dadurch gekennzeichnet, dass** einander benachbarte Reinigungswalzen (15) des ersten Transporteurs gegenläufig antreibbar sind.

11. Reinigungslader zum Aufnehmen von Rode- oder Erntegut und zum Fördern des aufgenommenen Rodegutes auf die Ladefläche eines Transportfahrzeugs, mit einer Nachreinigungsstrecke (9) für das Rodegut, **dadurch gekennzeichnet, dass** die Nachreinigungsstrecke (9) von einer Vorrichtung nach einem der vorhergehenden Ansprüche gebildet ist.

## Claims

1. Device for transporting and cleaning root crops or harvest products, preferably for transporting and cleaning sugar beet, with a transport section which conveys and thereby cleans the crops in one transport direction (A), with at least a first conveyor (16) which is designed as a roller cleaner or grab roller cleaner and which has a first conveying plane for the harvest crops formed by at least two adjoining cleaning rollers (15) which can be driven in rotation, **characterised by** at least a second conveyor designed as a sieve belt cleaner (20) having a second transport face for the harvest crops formed by at least one sieve belt (21), wherein the at least one first conveyor (16) and the at least one second conveyor (20) are able to move relative to one another to adapt to the cleaning of the crops, namely between at least a first operating state in which the transport surface of the first conveyor (16) is overlapped by the transport surface of the second conveyor, and at least a second operating state in which the transport surfaces of the conveyors (16, 20) follow one another in the transport direction (A) without any overlapping or slightly overlapping one another with a reduced overlap compared to the first operating state.

2. Device according to claim 1 **characterised in that** in the first operating state the transport surface of the at least one first conveyor (16) is overlapped completely or practically completely, by way of example up to at least 50%, by the transport surface of the second conveyor.

3. Device according to claim 1 or 2 **characterised in that** in relation to the transport direction (A) the at least one second conveyor (20) runs ahead of the first conveyor (16).

4. Device according to one of the preceding claims **characterised in that** the at least one second conveyor (20) is movable relative to the first conveyor (16).

5. Device according to one of the preceding claims **characterised in that** the at least one first conveyor (16) and the at least one second conveyor (20) can be adjusted or moved infinitely relative to one another.

6. Device according to one of the preceding claims **characterised in that** for adapting the cleaning action the at least one second conveyor (20) is able to move under a conveyor serving to transport the crops, by way of example under the first conveyor (16), by a length which in the second operating state is not used as a transport surface for the crops.

7. Device according to one of the preceding claims **characterised by** means (25, 26) for deflecting the second conveyor (20) in such a way that it forms at least in the second operating state at least an upper section (21a) which forms the transport surface for the crops as well as a further section (20b) which runs beneath this upper section.

8. Device according to claim 7 **characterised in that** the means (25, 26) are provided for deflecting the second conveyor (20) at a crop inlet or at a crop pick-up (9.1).

9. Device according to one of the preceding claims **characterised in that** the at least two cleaning rollers (15) of the first conveyor (16) are mounted with their roller axis or longitudinal extension in the transport direction (A).

10. Device according to one of the preceding claims **characterised in** the adjoining cleaning rollers (15) of the first conveyor can be driven in contra-rotation.

11. Cleaning loader for picking up root or harvested crops and for conveying the picked-up root crops onto the loading surface of a transport vehicle, with an after-cleaning section (9) for the root crops, **characterised in that** the after-cleaning section (9) is formed by a device according to one of the preceding claims.

## Revendications

1. Dispositif pour le transport et le nettoyage de matières de défrichage ou de récolte, de préférence pour le transport et le nettoyage de betteraves sucrières, comprenant un tronçon de transport qui transporte les matières de récolte dans une direction de transport (A) et qui les nettoie en même temps, comprenant au moinsun premier transporteur (16) réalisé sous la forme d'un dispositif de nettoyage à rouleaux ou d'un dispositif de nettoyage à rouleaux du type à soufflets, qui présente un premier plan de transport pour les matières de récolte, formé par au moins deux rouleaux de nettoyage (15) voisins l'un de l'autre et à entraînement rotatif, **caractérisé par** au moins un deuxième transporteur réalisé sous la forme d'un dispositif de nettoyage sous la forme d'une toile perforée (20) comprenant une deuxième surface de transport pour les matières de récolte formée par au moins une toile perforée (21), ledit au moins un premier transporteur (16) et ledit au moins un deuxième transporteur (20) étant mobiles l'un par rapport à l'autre pour une adaptation du nettoyage des matières de récolte, et plus précisément entre au moins un premier état d'exploitation dans lequel la surface de transport du deuxième transporteur vient se superposer à la surface de transport du premier transporteur (16) et au moins un deuxième état d'exploitation dans lequel les surfaces de transport des transporteurs (16, 20) se raccordent l'une à l'autre sans chevauchement ou bien se chevauchent légèrement l'une l'autre avec un chevauchement réduit par rapport à celui du premier état d'exploitation, dans la direction de transport (A).

2. Dispositif selon la revendication 1, **caractérisé en ce que**, dans le premier état d'exploitation, la surface de transport du deuxième transporteur vient se superposer à la surface de transport dudit au moins un premier transporteur (16) de manière complète ou de manière pratiquement complète, par exemple jusqu'à au moins 50 %.

3. Dispositif selon la revendication 1 ou 2, **caractérisé en ce que**, en se référant à la direction de transport (A), ledit au moins un deuxième transporteur (20) est en avance de phase par rapport au premier transporteur (16).

4. Dispositif selon l'une quelconque des revendications précédentes, **caractérisé en ce que** ledit au moins un deuxième transporteur (20) est mobile par rapport au premier transporteur (16).

5. Dispositif selon l'une quelconque des revendications précédentes, **caractérisé en ce que** ledit au moins un premier transporteur (16) et ledit au moins un deuxième transporteur (20) sont mobiles ou peuvent être réglés l'un par rapport à l'autre en continu.

6. Dispositif selon l'une quelconque des revendications précédentes, **caractérisé en ce que** ledit au moins un deuxième transporteur (20), pour l'adaptation du nettoyage, peut se déplacer sur une longueur non utilisée comme surface de transport pour les matières de récolte dans le deuxième état d'exploitation, en dessous d'un transporteur utilisé pour le transport des matières de récolte, par exemple en dessous du premier transporteur (16).

7. Dispositif selon l'une quelconque des revendications précédentes, **caractérisé par** des moyens (25, 26) pour le renvoi du deuxième transporteur (20) de telle sorte que celui-ci, au moins dans le deuxième état d'exploitation, forme un tronçon supérieur (21a) qui fait office de surface de transport pour les matières de récolte et un tronçon supplémentaire inférieur (20b) s'étendant en-dessous de ce tronçon.

8. Dispositif selon la revendication 7, **caractérisé en ce que** les moyens (25, 26) pour le renvoi du deuxième transporteur (20) sont prévus à une entrée pour les matières de récolte ou bien à une alimentation de matières de récolte (9.1).

9. Dispositif selon l'une quelconque des revendications précédentes, **caractérisé en ce que** lesdits au moins deux rouleaux de nettoyage (15) du premier transporteur (16) sont disposés avec leur axe de rouleau ou avec leur étendue longitudinale dans la direction de transport (A).

10. Dispositif selon l'une quelconque des revendications précédentes, **caractérisé en ce que** des rouleaux de nettoyage (15) voisins l'un de l'autre du premier transporteur peuvent être entraînés en antirotation.

11. Nettoyeur-chargeur pour le ramassagede matières de défrichage ou de récolte et pour le transport des matières de défrichage ramassées sur la surface de chargement d'un véhicule de transport, comportant un tronçon de nettoyage ultérieur (9) pour les matières de défrichage, **caractérisé en ce que** le tronçon de nettoyage ultérieur (9) est formé par un dispositif selon l'une quelconque des revendications précédentes.
